# EUROPEAN PATENT APPLICATION

(11) **EP 1 061 621 A1**
(43) Date of publication of application: **20.12.2000**
(21) Application number: 00201847.1
(22) Date of filing: 25.05.2000
(51) Int. Cl.: H02B 1/32

(54) **Electric switchboard of improved type**

(30) Priority: 15.06.1999 IT PN990049
(71) Applicant: Elleci S.p.A., 33080 Porcia (PN) (IT)
(72) Inventor: Corazza, Claudio, 33080 Porcia (PN) (IT)
(74) Representative: Da Riva, Ermanno

(57) **Abstract**

The invention relates to a box-type electric switchboard ( 20 ) which houses, in a removable way, at least a frame or a panel ( 30 ) for supporting the electric apparatuses.

The body of the frame or panel ( 30 ) presents shaped seats ( 44, 45, 46, 47 ) which are suited to removably engage corresponding shaped protrusions ( 31, 32, 33, 34 ) which are provided on the inside of the box of the electric switchboard ( 20 ) for supporting the frame ( 30 ) in a vertical working position.

Upon manual lifting and pulling out of the frame ( 30 ), the seats ( 44, 45, 46, 47 ) of this last frame disengage slidably the protrusion ( 31, 32, 33, 34 ) of the box and allow whether the guided swinging of the frame ( 30 ) toward an inclined position for inspection and maintenance purposes, or the possible subsequent removal of the frame ( 30 ) from the box of the electric switchboard ( 20 ).

The frame ( 30 ) can be mounted or removed by means of easy operations which can be manually performed with one hand and without the use of tools.

## Description

The invention relates to an electric switchboard of improved type.

In particular, the invention regards a box-type electric switchboard provided with a frame for supporting the electric apparatuses which is realized in such a way as to simplify and rationalize the carrying out of the inspection and maintenance operations of the same electric apparatuses.

As it is known, the electrical systems begin immediately after the metering apparatuses or meters of the electricity supplied by the public electric grid.

A general switchboard is usually installed after the eletricity meters and it is composed of a metallic supporting structure and of one or more insulating panels on which are installed the apparatuses for inspecting, measuring, controlling, protecting and regulating the circuitry of the electric system as well as the instruments for measuring the involved electric quantities.

According to the outer conformation, the electric switchboards can be of open type, open with frontal guard type, closed type, cabinet type, bench type and closed box type.

In particular, the electric switchboards of closed box-type are anchored to a vertical wall and are composed essentially of a parallelepiped fitment or box whose frontal quadrangular opening can be provided with a closing door.

The inside of the fitment houses one or more panels or frames for supporting the electric apparatuses ( such as the master switch and the divisional switches ) and their various structural supporting and fastening components ( such as casings, closing plates, diaphragmatic plates et cetera).

In general, the frame for supporting the electric apparatuses is removably mounted, by means of screw systems or similar retaining devices, on suitable anchor brackets provided on the inside of the electric switchboard.

This kind of installation of the frame for supporting the electric apparatuses complicates the carrying out of the operations for the initial mounting of the electric switchboard and especially the subsequent inspection and maintenance operations of the electric apparatuses.

In particular, the persons employed in checking and supervising the electric switchboard must at first unloose, by means of a suitable tool, the fastening screws of the frame for supporting the electric apparatuses. Afterwards, each fastening screw must be manually unscrewed and put aside for the reassembly operations.

It is to be pointed out that the operator is uncomfortably forced to use one hand for supporting the frame in vertical position while, with the other hand, he must unscrew the fastening screws.

After the frame has been removed from the electric switchboard and kept at the distance allowed by the length of the cables for connecting the electric apparatuses, the maintenance worker makes operations which often require the use of both hands.

Therefore, the frame is preferably rested, where it is possible, on a supporting plane.

In the absence of supporting planes, the weight of the entire frame dangling from the eletric switchboard is wrongly and carelessly charged to the phisical resistance of the electric cables only.

Also the reassembly operations of the frame on the electric switchboard are complicated by the fact that the worker, with one hand, must hold the frame in vertical position,paying attention to align its fastening holes with the slots of the anchor brackets, and , with the other hand, he must at once screw at least a number of the fastening screws of the frame, for instance those positioned in the upper angles of the frame or in the angles located on a diagonal of the frame.

It would be desirable, and it is the main object of the invention, to obviate the above-described drawbacks by means of an electric switchboard whose frame for supporting the electric apparatuses can be mounted and dismounted in such a way as to simplify and rationalize the carrying out of the inspection and maintenance operations of the electric switchboard.

In particular, it is the object of the present invention to realize an electric switchboard provided with a frame for supporting the electric apparatuses which can be mounted, in the work-position, or removed, in the inspection and/or maintenance position, through easy manual operations which can be performed with one hand and without the use of tools.

These and other objects are attained according to the invention by an electric switchboard having the hereinafter claimed features.

The objects and the features of the electric switchboard according to the invention will appear clear from the following description with reference to the accompanying drawing, wherein:
- the figure 1 shows a perspective view from above of the outer box of an electric switchboard according to the invention, wherein the frame for supporting the electric apparatuses is not shown for clarity reasons;
- the figure 2 is a perspective view of the box illustrated in the figure 1 ,wherein it is shown , with a broken line, also the supporting frame of the electric apparatuses in its vertical working position;
- the figure 3 is a frontal view of the box of the figure 2;
- the figure 4 is a longitudinal section taken along section line IV-IV in the figure 3;
- the figures 6, 7, 8 are respective lateral view of a portion of the frame for supporting the electric apparatuses in three different working positions;
- the figure 9 shows a perspective view of the box , wherein the frame for supporting the electric apparatuses is shown in an initial phase of its swinging movement from the vertical working position to the inclined position for inspection and maintenance purposes;
- the figure 10 is a longitudinal section of the box in the figure 9 ;
- the figure 11 is a perspective view of the box with the frame for supporting the electric apparatuses in the final phase of its swinging movement towards the inclined position for inspection and maintenance purposes;
the figure 12 is a longitudinal section of the box in the figure 11.

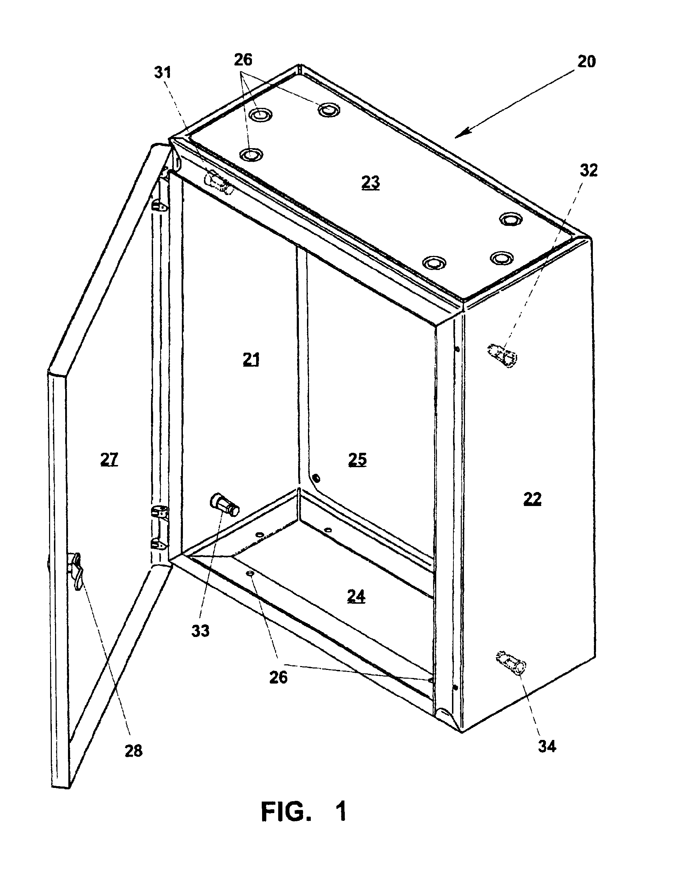

In the figure 1 it is shown an electric switchboard 20 of closed box-type comprising a parallelepiped-shaped outer fitment made by cutting, pressing and bending processes of metal sheets which are so sufficiently well known as not to require further details.

It is well understood that the reference to cutting, pressing and bending processes of metal sheets is made by way of a purely indicative and not limitative example because the electric switchboard 20 could be realized through other per se- known systems and means.

The fitment or outer box of the electric switchboard 20 comprises essentially two lateral walls 21, 22, an upper wall or sky 23, a lower wall or bottom 24 and a rear wall 25.

In a per se known way , the sky 23, the bottom 24 and the rear wall 25 present a central portion which is removably connected to the structure of the fitment by means of usual screw systems 26 whether for allowing the passage of cablings which are oriented towards several directions or for allowing the side-by-side , back-to-back or over-under self-assembly of the electric switchboard 20 together with other electric switchboards.

The frontal opening of the electric switchboard 20 presents a usual quadrangular form and it is guarded by a closing door 27 which is pivotally mounted about a vertical axis and equipped, in a per se known way, with a locking device 28.

The closing door 27 and the relative lock 28 are intended to stop the infiltration of extraneous bodies, to permit the access to the electric switchboard 10 only to the personnel employed in working, surveillance and maintenance of the electrical system and to prevent unauthorized persons from operating, also unintentionally, the various electrical apparatuses.

An upper pin 31,32 and a lower pin 33,34 , which are protruding towards the inside of the box and following an almost orthogonal direction with respect to the lateral walls 21, 22, are respectively fixed on the inner surface of each lateral wall 21, 22 of the box of the electric switchboard 20 ( figure 1 ).

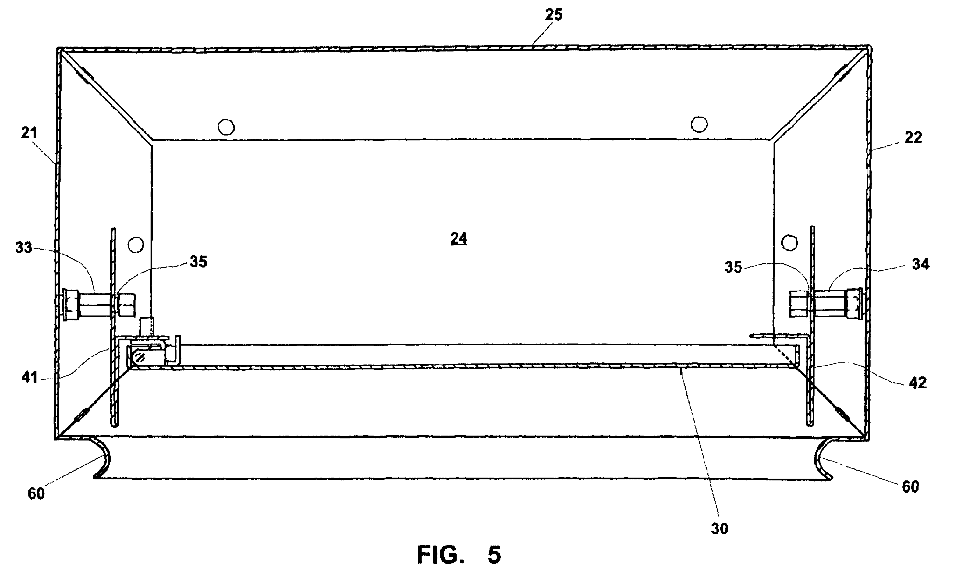

Each pin 31, 32, 33, 34 has a shape of a polyhedron with an hexagonal base ( figure 5 ) and, near to its free end, it is provided with an annular groove 35 whose function will be hereinafter described.

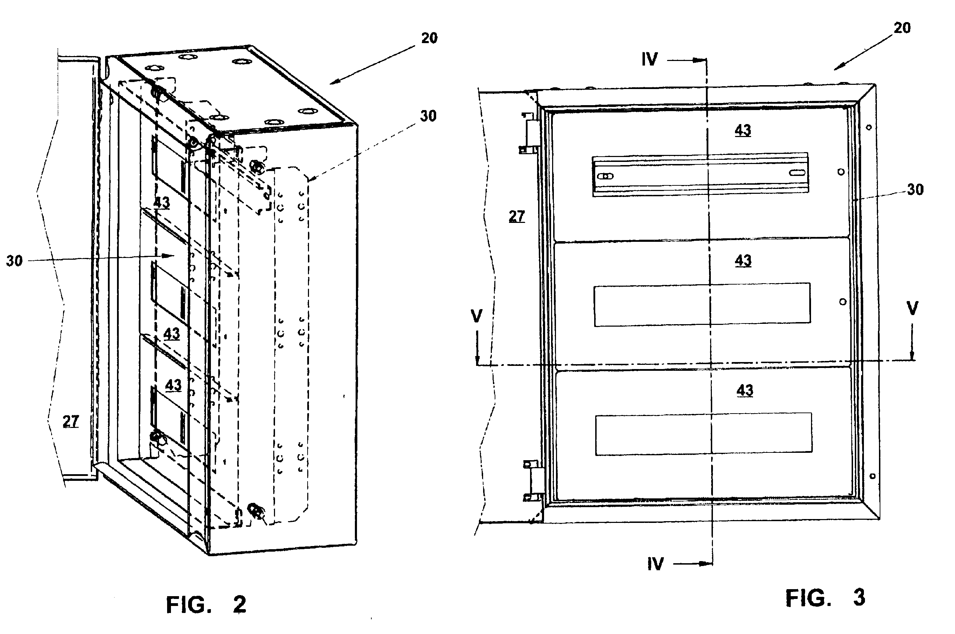

On the inside of the electric switchboard 20 can be removably housed a frame 30 ( figure 3 and following figures ) for supporting the electric apparatuses which are intended for actuating , controlling and protecting an electric system as well as the instruments for measuring the involved electric quantities, they all are so sufficiently well known as not to require further details.

The frame 30 is essentially formed by two vertical shoulders 41, 42 ( figure 5 ) which are connected to each other by horizontal elements or traverses which are partly shown for clarity of description.

In a known and not described way, one or more modular panels 43 ( figure 3 and following figures ) which are suited to house the various electric apparatuses.

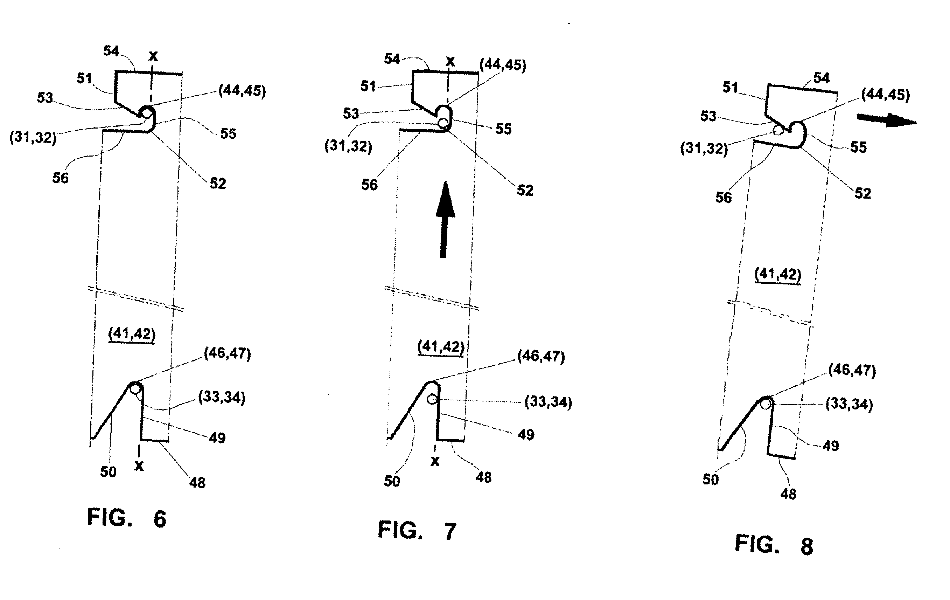

It is to be pointed out that an upper seat 44, 45 ( figures 6, 7, 8 ) and a lower seat 46, 47, both open and suited to join with the upper pins 31, 32 and the lower pins 33, 34 attached to the fitment of the electric switchboard 20, are respectively realized near to the upper and lower ends of each vertical shoulder 41, 42.

The upper seats 44, 45 and also the lower seats 46, 47 are essentially made of a semicircular notch which is suited to couple together with the annular groove 35 realized on each upper pins 31, 32 and lower pins 33, 34 ( figure 5 ) in the box of the electric switchboard.

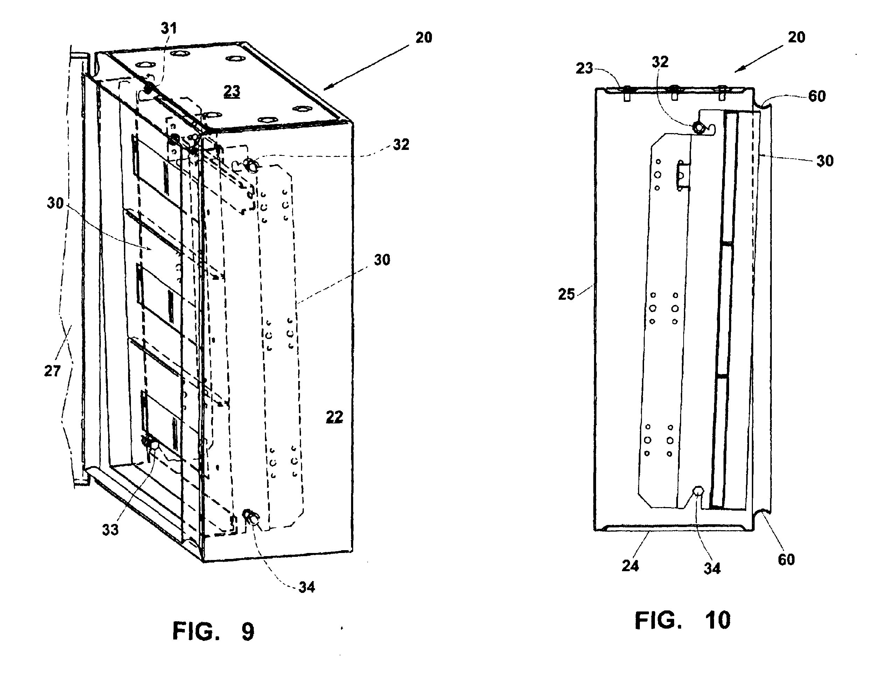

In particular, each lower seat 46, 47 is open towards the lower side 48 ( figure 6, 7, 8 ) of the respective vertical shoulder 41, 42 and the ends of its semicircular notch are respectively joined to the said lower side 48 with a vertical edge 49 , which is almost parallel to the longitudinal axis x-x of the shoulder ( figure 7 and 8 ), and with an oblique edge 50 which is diverging from the longitudinal axis x-x and going in the direction of the rear side 51 of the respective vertical shoulder 41, 42.

Each upper seats 44, 45 is open towards the rear side 51 of the respective vertical shoulder 41, 42 and the ends of its semicircular notch are respectively joined to the said rear side 51 with a "L"-shaped edge 52 ( figures 6, 7, 8 ) and with an oblique edge 53 which is diverging towards the upper side 54 of the respective vertical shoulder 41, 42.

In particular, the "L"-shaped edge 52 of each upper seat 44, 45 is formed by a first vertical length 55, which is almost parallel to the longitudinal axis x-x of the shoulder, and by a second length 56 which is orthogonal to it.

Thanks to the engagement between the upper 44, 45 and the lower seats 46, 47 of each shoulder 41,42 with the respective upper 31,32 and lower pins 33, 34 fixed to the lateral walls 21, 22 of the box, the frame 30 can be advantageously mounted or dismounted with respect to the box of the electric switchboard 20 by means of easy operations which can be manually performed with one hand and without the use of tools.

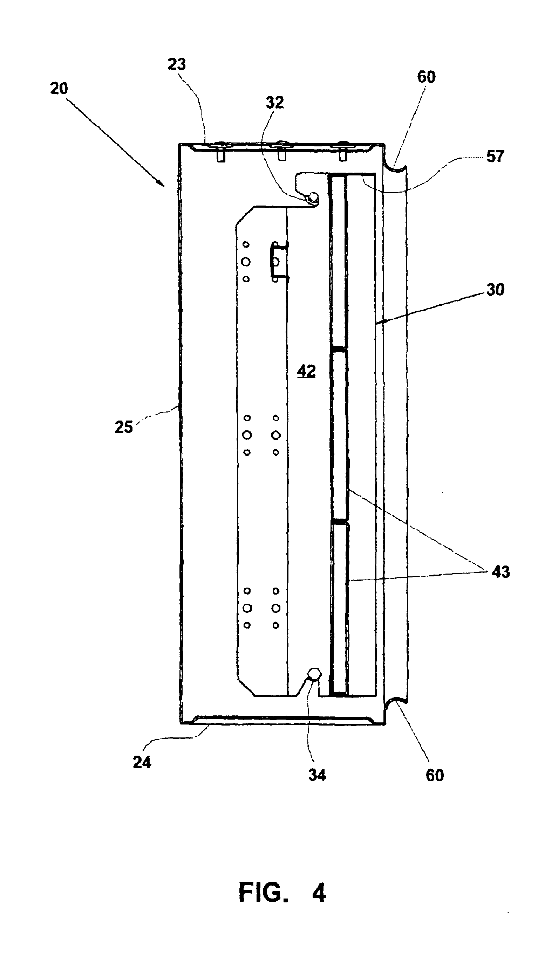

It is to be pointed out that the manipulating of the frame 30 is advantageously helped by the fact that the perimetrical edge 60 of the frontal opening of the electric switchboard 20 ( figures 4 and 5 ) is essentially curvilinear and its convex surface delimites the size of the frontal opening of the electric switchboard 20 as claimed in a contemporaneous patent application of the same applicant.

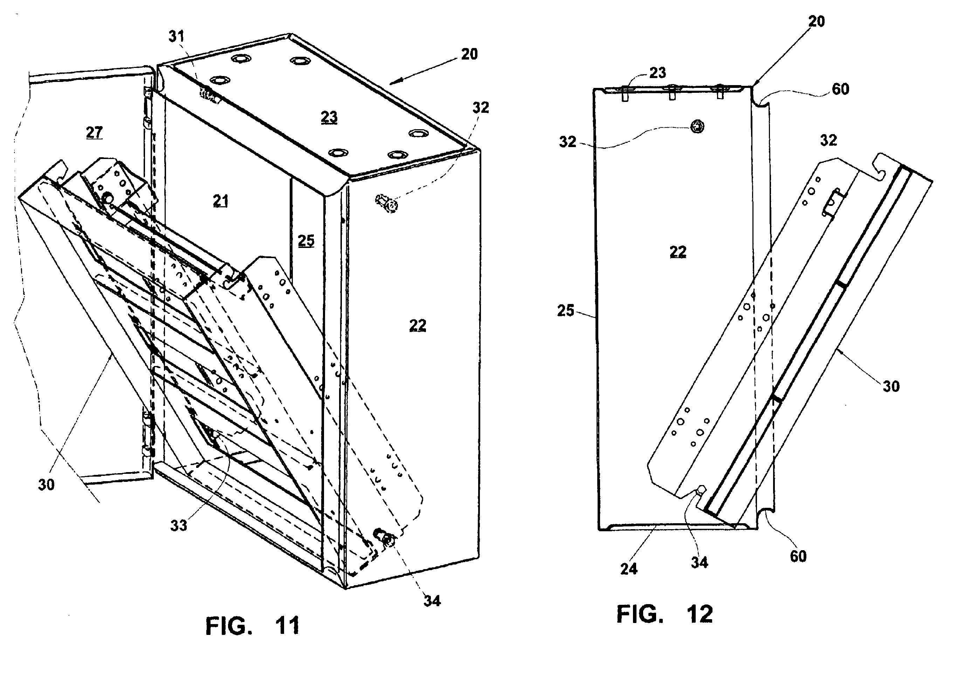

During the assembly, the user inserts the lower edge of the frame 30 in the box of the electric switchboard 20 as far as the lower seats 46, 47 of its vertical shoulders 41, 42 are mounted on the respective lower pins 33, 34 fixed to the lateral walls 21,22 of the box of the electric switchboard 20 ( figure 12 ).

After which, the user swings the upper edge of the frame 30 towards the box of the electric switchboard 20 as far as the upper seats 44, 45 of its vertical shoulders 41, 42 are mounted on the respective upper pins 31, 32 fixed to the lateral walls 21,22 of the box of the electric switchboard 20.

During the final part of the oscillating movement, the oblique edges 53 of the upper seats 44, 45 of the frame 30 come into contact with the groove 35 of the upper pins 31,32 by so producing the vertical lifting of the frame 30 as far as the semicircular seats 44, 45 engage correctly the the grooves 35 of the upper pins 31, 32.

When the assembly phase is over, the electric switchboard 20 is in the position shown in the figures 2, 3, 4. On the occasion of inspection and maintenance operations of the electric apparatuses, the disassembly of the frame 30 becomes necessary.

The disassembly phase requires that the user pulls upwards the upper edge 57 of the frame 30, in the direction of the arrow in the figure 7, as far as to raise the frame in the position of figure 7.

The upper edge 57 of the frame 30 is advantageously provided with at least a shallow cavity ( not shown in the figures ) which is suited to guide and to improve the handgrip of the user during this assembly phase.

After the lifting of the frame 30, the pins 31, 32, 33, 34 are disengaged from the respective semicircular seats 44, 45, 46, 47 and are come into contact with the oblique edges 50 and 53 previously described ( figures 8, 9 and 10 ). By consequence, the user can swing the upper edge 57 of the frame 30 towards the outside of the electric switchboard 20 as far as the position of maximum opening shown in the figures 11 and 12.

From this position, the frame 30 can be removed from the electric switchboard 20 by sliding the lower pins 33, 34 on the oblique edges 50 of the lower seats 46, 47.

From what stated it is clear that the electric switchboard 20 according to the present invention allows to overcome the above described drawbacks of the usual electric switchboards because the frame 30 for supporting the electric apparatuses can be mounted and dismounted in such a way as to make easier and more rational the carrying out of the inspection and maintenance operations of the electric switchboard.

In particular, the invention achieves the object of realizing an electric switchboard provided with a frame for supporting the electric apparatuses which can be mounted in the working position or removed in the inspection and/or maintenance position by means of easy operations which can be manually performed with one hand and without the use of tools.

It is well understood that modifications and variations may be made to the electric switchboard 20 forming object of the present invention without departing however from the scope defined by the following claims.

For instance, the upper pins 31, 32 as well as the lower pins 33, 34 can be realized by means of an horizontal rod having its ends respectively attached to the lateral walls 21, 22 of the box of the electric switchboard 20, or by means of supporting elements ( for example small plates with pins ) which engage the sky 23 and the bottom 24 of the box.

Alternatively, the said pins 31, 32, 33, 34 can be also realized on vertical uprights or rails which are attached to the sky 23, the bottom 24 and the lateral walls 21, 22 of the box of the electric switchboard 20 and which are provided with depth regulating systems.

## Claims

1. Electric switchboard ( 20 ) of closed box-type comprising a parallelepiped-shaped box and presenting a quadrangular-shaped frontal opening and a closing door ( 27 ), said electric switchboard ( 20 ) being suited to house, in a removable way, at least a rectangle-shaped frame ( 30 ) or a blind panel for supporting the electric apparatuses said fitment or box of the electric switchboard ( 20 ) being realized by means of known metal sheet cutting, bending and welding processes , or by means of plastic sheet molding or the like per se known processes , during which the frontal edges of these sheets are bent towards the outside of the fitment in order to form a perimetrical curvilinear edge for said frontal opening of the electric switchboard ( 20 ), as described in a contemporaneous patent application of the same applicant, characterized in that protrusions ( 31, 32, 33, 34 ) comprising a shaped portion ( 35 ) are provided on the inner side of each lateral wall ( 21, 22 ) of the box of the electric switchboard ( 20) and corresponding shaped seats ( 44, 45, 46, 47 ) are realized in the vertical shoulder ( 41, 42 ) of the frame ( 30 ), the said shaped seats ( 44, 45, 46, 47 ) are suited to removably engage the shaped portion ( 35 ) of the said protrusions (31, 32, 33, 34 ) and to support the frame ( 30 ) in a vertical working position, and upon lifting and pulling out of the frame ( 30 ) manually performed by the user, the said shaped seats ( 44, 45, 46, 47 ) are suited to slidably disengage the said protrusions (31, 32, 33, 34 ) and to allow whether the guided swinging of the frame ( 30 ) towards an inclined position for inspection and maintenance purposes, or the possible subsequent removal of the frame ( 30 ) from the box of the electric switchboard (20).

2. Electric switchboard ( 20 ) according to the claim 1, characterized in that the said protrusions ( 31, 32, 33, 34 ) realized on the inner surface of each lateral wall ( 21, 22) of the box are formed by an upper pin ( 31, 32 ) and a lower pin ( 33, 34 ), having a body shaped as a polyhedron with an hexagonal base, which are protruding towards the inside of the box following a direction almost orthogonal to the lateral walls ( 21, 22 ) and, near their free ends, they are provided with an annular groove (35) ; said shaped seats ( 44, 45, 46, 47 ) are composed of an upper semicircular notch ( 44, 45 ) and a lower semicircular notch which are respectively made in the body of the upper and lower ends of each vertical shoulders ( 41, 42 ) of the frame (30), the said upper notch ( 44, 45 ) being open towards the rear side ( 51 ) of the respective vertical shoulder ( 41, 42 ) and its ends are respectively joined to the said rear side ( 51 ) with a "L"-shaped edge ( 52 ) and with an oblique edge ( 53 ) which is diverging towards the upper side ( 54 ) of the respective vertical shoulder (41, 42) and its ends are respectively joined to the said lower side ( 48 ) with a vertical edge (49) which is almost parallel to the longitudinal axis x-x of the respective vertical shoulder ( 41, 42 ), and with an oblique edge ( 50 ) which is diverging from the said longitudinal axis x-x and going in the direction of the rear side ( 51 ) of the respective vertical shoulder ( 41, 42 ).

3. Electric switchboard according to the claims 1, characterized in that the said protrusions ( 31, 32, 33, 34 ) are realized on vertical uprights which are attached to the sky ( 23 ), the bottom ( 24 ) and the lateral walls ( 21, 22 ) of the box of the electric switchboard ( 20 ) as well as provided with depth regulating systems.
